# EUROPEAN PATENT APPLICATION

(11) **EP 4 579 191 A1**
(43) Date of publication of application: **02.07.2025**
(21) Application number: 23857204.4
(22) Date of filing: 09.08.2023
(51) Int. Cl.: G01C 21/20, G08G 5/00

(54) **CRUISABLE DISTANCE COMPUTATION DEVICE, NAVIGATION MANAGEMENT SYSTEM, AND PROGRAM**

(30) Priority: 24.08.2022 JP 2022133584
(71) Applicant: DENSO CORPORATION, Kariya-city, Aichi 448-8661 (JP)
(72) Inventor: NAKAMURA, Masaya, Kariya- city Aichi 4488661 (JP); YOSHIDA, Shuhei, Kariya- city Aichi 4488661 (JP)
(74) Representative: TBK
(86) International application number: PCT/JP2023/029054
(87) International publication number: WO 2024/043091

(57) **Abstract**

A cruising distance calculation device (20) includes a distance calculation unit (26) configured to calculate a cruising distance of an eVTOL (100) which is an electric moving object moving in a horizontal direction and a vertical direction, and an output unit (27) configured to output information related to a calculation result of the distance calculation unit. The distance calculation unit acquires a corrected remaining power amount obtained by correcting a remaining power amount of a battery (107) provided to the eVTOL with a departure and arrival power amount required during departure and/or arrival of the eVTOL, and calculates the cruising distance based on the corrected remaining power amount.

## Description

### CROSS REFERENCE TO RELATED APPLICATION

The present application is based on Japanese Patent Application No. 2022-133584 filed on August 24, 2022. The entire disclosures of all of the above applications are incorporated herein by reference.

### TECHNICAL FIELD

The present disclosure relates to a cruising distance calculation device, a navigation management system, and a program.

### BACKGROUND ART

Patent Literature 1 discloses a cruising distance estimation device of an electric automobile. Contents of the description of the prior art literature are incorporated by reference as a description of technical elements in this description.

### PRIOR ART LITERATURE

### PATENT LITERATURE

PATENT LITERATURE 1: JP5729191B

### SUMMARY OF INVENTION

In a case of an electric moving object which moves in a horizontal direction and a vertical direction, such as an electronic vertical take-off and landing aircraft or an electric submarine, a using method of power is greatly different from that of an electric automobile. Therefore, even if the technique disclosed in Patent Literature 1 is used, a cruising distance cannot be accurately calculated. In the above viewpoint and other viewpoints that are not mentioned, further improvements are required for a cruising distance calculation device, a navigation management system, and a program.

An object of the present disclosure is to provide a cruising distance calculation device, a navigation management system, and a program capable of improving accuracy of a cruising distance for an electric moving object which moves in a horizontal direction and a vertical direction.

An aspect of the present disclosure is a cruising distance calculation device for an electric moving object, which is configured to move in a horizontal direction and a vertical direction. The cruising distance calculation device comprises: a distance calculation unit configured to acquire a corrected remaining power amount, which is obtained by correcting a remaining power amount of a battery provided to the electric moving object, with a departure and arrival power amount, which is required during departure and/or arrival of the electric moving object, and calculate a cruising distance based on the corrected remaining power amount; and an output unit configured to output information related to a calculation result of the distance calculation unit.

The electric moving object which moves in the horizontal direction and the vertical direction requires large power during the departure or the arrival. According to the cruising distance calculation device of the disclosure, the corrected remaining power amount is used to calculate the cruising distance. The corrected remaining power amount is obtained by correcting the remaining power amount of the battery with the departure and arrival power amount required during the departure and/or the arrival of the electric moving object. As a result, accuracy of the cruising distance can be improved for the electric moving object which moves in the horizontal direction and the vertical direction.

Another aspect of the present disclosure is a navigation management system for an electric moving object, which is configured to move in a horizontal direction and a vertical direction. The navigation management system comprises: a cruising distance calculation device configured to calculate a cruising distance of the electric moving object and output information related to a calculation result; and a navigation management device configured to manage navigation of the electric moving object and perform predetermined processing based on the information. The cruising distance calculation device is configured to acquire a corrected remaining power amount, which is obtained by correcting a remaining power amount of a battery provided to the electric moving object, with a departure and arrival power amount, which is required during departure and/or arrival of the electric moving object, and calculate the cruising distance based on the corrected remaining power amount.

The electric moving object which moves in the horizontal direction and the vertical direction requires large power during the departure or the arrival. According to the navigation management system of the disclosure, the corrected remaining power amount is used to calculate the cruising distance. The corrected remaining power amount is obtained by correcting the remaining power amount of the battery with the departure and arrival power amount required during the departure and/or the arrival of the electric moving object. As a result, the accuracy of the cruising distance can be improved for the electric moving object which moves in the horizontal direction and the vertical direction.

Another aspect of the present disclosure is a program to be applied to an electric moving object, which is configured to move in a horizontal direction and a vertical direction. The program is configured to cause at least one processing unit to: calculate a cruising distance based on a corrected remaining power amount, which is obtained by correcting a remaining power amount of a battery provided to the electric moving object, with a departure and arrival power amount, which is required during departure and/or arrival of the electric moving object; and output information related to a calculation result.

The electric moving object which moves in the horizontal direction and the vertical direction requires large power during the departure or the arrival. According to the program of the disclosure, the corrected remaining power amount is used to calculate the cruising distance. The corrected remaining power amount is obtained by correcting the remaining power amount of the battery with the departure and arrival power amount required during the departure and/or the arrival of the electric moving object. As a result, the accuracy of the cruising distance can be improved for the electric moving object which moves in the horizontal direction and the vertical direction.

Multiple aspects disclosed in the description adopt different technical means to achieve respective objects. Reference numerals in parentheses in the claims and items exemplify the correspondence with portions of embodiments described later, and are not intended to limit the technical scope. The objects, features, and advantageous effects disclosed in this description will become more apparent with reference to the following detailed description and accompanying drawings.

### BRIEF DESCRIPTION OF THE DRAWINGS

FIG. 1 is a diagram showing a power profile of an eVTOL.
FIG. 2 is a diagram showing a configuration of the eVTOL and a ground station.
FIG. 3 is a diagram showing a schematic configuration of a navigation management system in a first embodiment.
FIG. 4 is a block diagram showing a cruising distance calculation device.
FIG. 5 is a flowchart showing an example of a navigation management method.
FIG. 6 is a flowchart showing an example of the navigation management method.
FIG. 7 is a diagram showing a threshold which is based on a remaining cruising distance.
FIG. 8 is a flowchart showing an example of the navigation management method.
FIG. 9 is a flowchart showing a cruising distance calculation method.
FIG. 10 is a flowchart showing a method for calculating a departure and arrival power amount.
FIG. 11 is a flowchart showing a method for calculating a power consumption rate.
FIG. 12 is a diagram showing a schematic configuration of the navigation management system in a second embodiment.
FIG. 13 is a diagram showing a modification.
FIG. 14 is a diagram showing a modification.
FIG. 15 is a diagram illustrating a method for calculating a departure and arrival power amount in a third embodiment.
FIG. 16 is a diagram showing a modification.

### DESCRIPTION OF EMBODIMENTS

Hereinafter, multiple embodiments will be described with reference to the drawings. Duplicate descriptions may be omitted by designating corresponding components by the same reference numerals in each embodiment. When only a part of a configuration is described in each embodiment, a configuration of another embodiment described earlier can be applied to the other part of the configuration. Further, in addition to combinations of configurations explicitly shown in the description of the embodiments, the configurations of multiple embodiments can be partially combined even when the combinations are not explicitly shown as long as there is no problem in the combinations in particular.

A cruising distance calculation device, a navigation management system, and a program to be described below are applied to an electric moving object which moves in a horizontal direction and a vertical direction. A movement of the electric moving object may include a movement in a direction having a horizontal direction component and a vertical direction component, that is, in an oblique direction. The electric moving object includes a motor (rotary electric machine) as a drive source for movement. Examples of the electric moving object include an electronic vertical take-off and landing aircraft (eVTOL), an electronic short distance take-off and landing aircraft (eSTOL), a drone, and an electric submarine. The eVTOL is an abbreviation of an electronic vertical take-off and landing aircraft. The eSTOL is an abbreviation of an electronic short distance take-off and landing aircraft. The eVTOL, the eSTOL, and the drone may be referred to as electric flight vehicles.

The electric moving object may be any of a manned aircraft and an unmanned aircraft. In a case of the manned aircraft, the electric moving object is operated by a pilot as an operator. In a case of the unmanned aircraft, the electric moving object may be remotely operated by an operator or may be automatically and remotely operated by a control system. The description of A and/or B means at least one of A and B. That is, only A, only B, and both A and B can be included.

### (First Embodiment)

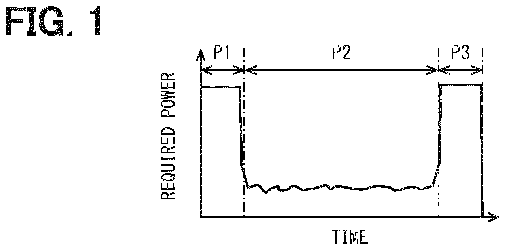

First, a power profile of an electric moving object will be described with reference to FIG. 1. Hereinafter, an example of the eVTOL serving as the electric moving object is shown.

### <Power Profile>

FIG. 1 shows a power profile from take-off to landing of the eVTOL. A period P1 is referred to as a take-off period, a take-off time, a departure period, a departure time, or the like. A period P2 is referred to as a cruising period, a cruising time, or the like. A period P3 is referred to as a landing period, a landing time, an arrival period, an arrival time, or the like. For convenience, in FIG. 1, required power, that is, an output is constant in substantially an entire region of each of the periods P1 and P3.

The eVTOL ascends from a take-off point to a cruising start point in the period P1. The eVTOL cruises at a predetermined altitude in the period P2. The eVTOL descends from an end point of the period P2 to a landing point in the period P3. A movement direction of the eVTOL mainly includes a horizontal direction component in the period P2 and mainly includes a vertical direction component in each of the periods P1 and P3. In the periods P1 and P3 in which the eVTOL moves in the vertical direction, a motor of the eVTOL is required to provide a high output continuously for a predetermined time. Therefore, a power consumption amount during take-off and a power consumption amount during landing are large. A proportion of the power amount in the period P1 and the power amount in the period P3 to a total power amount of the batteries provided to the eVTOL is high.

Therefore, the cruising distance calculation device of the present embodiment to be described later calculates a cruising distance in consideration of the power consumption amount during the departure and/or the arrival. For example, when there is a stop at a relay point between a departure point and a destination point, a landing period to the relay point is also included in the period P3. A take-off period from the relay point is also included in the period P1. When a flight in which charging is performed one time includes multiple times of take-off and landing, the cruising distance calculation device of the present embodiment calculates the cruising distance in consideration of a consumed power amount in the multiple times of take-off and landing.

A power profile of the electric moving object other than the eVTOL which moves in the horizontal direction and the vertical direction is similar to that of the eVTOL. For example, in a case of the electric submarine, the electric submarine descends from the departure point to the cruising start point in the period P1, and cruises in the period P2. Then, in the period P3, the electric submarine ascends from an end point of the cruising period to the arrival point. Therefore, the power consumption amount during the departure and arrival when moving in the vertical direction is large.

### <Navigation Management System>

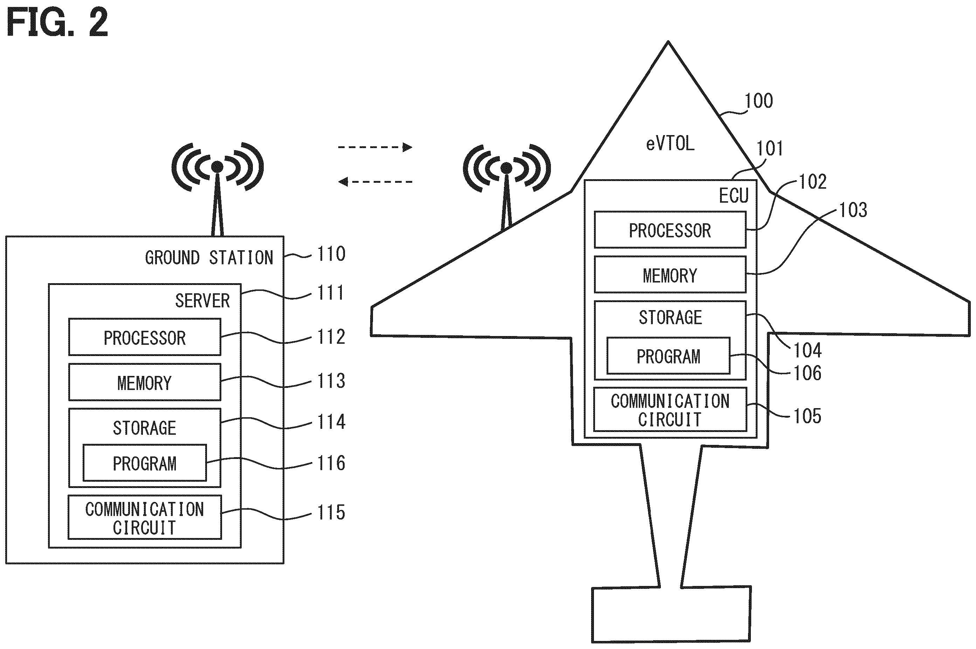

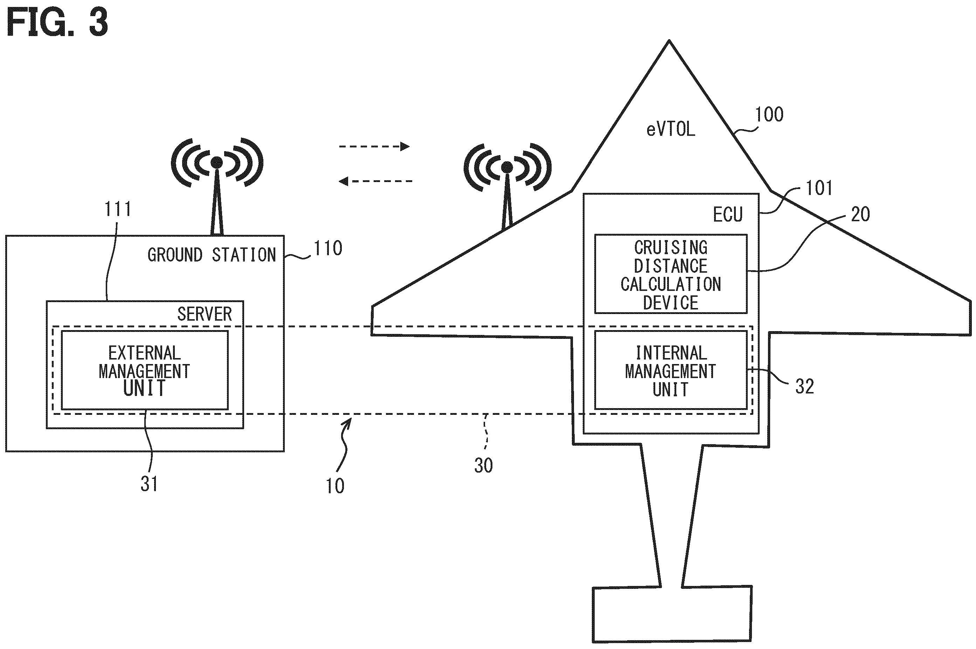

FIG. 2 shows a configuration of the eVTOL and a ground station. FIG. 3 shows a schematic configuration of the navigation management system.

The navigation management system is a system for planning a navigation schedule, monitoring a navigation status, collecting and managing information related to navigation, supporting the navigation, and the like. At least a part of functions of the navigation management system may be arranged in an internal computer of an eVTOL 100 shown in FIG. 2. At least a part of the functions of the navigation management system may be arranged in an external computer that can wirelessly communicate with the eVTOL 100. An example of the external computer is a server 111 of a ground station 110. The ground station 110 can wirelessly communicate with the eVTOL 100. The ground station 110 can wirelessly communicate with other ground stations.

As an example, in the present embodiment, a part of the functions of the navigation management system is arranged in an ECU 101 of the eVTOL 100, and a part of the functions of the navigation management system is arranged in the server 111 of the ground station 110. The functions of the navigation management system are shared between the ECU 101 and the server 111. The ECU is an abbreviation of an electronic control unit.

The ECU 101 includes a processor 102, a memory 103, a storage 104, and a communication circuit 105 for wireless communication. The processor 102 executes various processes by accessing the memory 103. The memory 103 is a rewritable volatile storage medium. The memory 103 is, for example, a RAM. The RAM is an abbreviation of a random access memory. The storage 104 is a rewritable nonvolatile storage medium. The storage 104 stores a program 106 to be executed by the processor 102. The program 106 constructs multiple functional units by causing the processor 102 to execute multiple instructions. The ECU 101 may include multiple processors 102.

Similar to the ECU 101, the server 111 includes a processor 112, a memory 113, a storage 114, and a communication circuit 115. The processor 112 executes various processes by accessing the memory 113. The memory 113 is a rewritable volatile storage medium, for example, a RAM. The storage 114 is a rewritable nonvolatile storage medium. The storage 114 stores a program 116 to be executed by the processor 112. The program 116 constructs multiple functional units by causing the processor 112 to execute multiple instructions. The server 111 may include multiple processors 112.

As shown in FIG. 3, a navigation management system 10 includes a cruising distance calculation device 20 and a navigation management device 30. Hereinafter, the cruising distance calculation device 20 may be simply referred to as the distance calculation device 20. As described above, the navigation management system 10 is a system for planning a navigation schedule, monitoring a navigation status, collecting and managing information related to navigation, supporting the navigation, and the like.

As will be described later, the distance calculation device 20 calculates a cruising distance in consideration of a power amount required during the take-off and/or landing of the eVTOL 100, and outputs information related to a calculation result. As an example, the distance calculation device 20 of the present embodiment is functionally disposed in the ECU 101 of the eVTOL 100. Details of the distance calculation device 20 will be described later.

The navigation management device 30 has functions other than a function of calculating the cruising distance among the functions of the navigation management system 10. The navigation management device 30 manages navigation of the eVTOL 100 and executes a predetermined process based on the information output by the distance calculation device 20. The navigation management device 30 plans a navigation schedule by, for example, input from a terminal (not shown).

As an example, the navigation management device 30 of the present embodiment includes an external management unit 31 and an internal management unit 32. The external management unit 31 is functionally disposed in the server 111 of the ground station 110. The internal management unit 32 is functionally disposed in the ECU 101 of the eVTOL 100. In this way, a part of the functions of the navigation management device 30 is arranged in the server 111, and the other part of the functions is arranged in the ECU 101. The external management unit 31 and the internal management unit 32 can wirelessly communicate with each other. The internal management unit 32 can communicate with various devices arranged in the eVTOL 100 in a wired or wireless manner.

### <Cruising Calculation Distance Device>

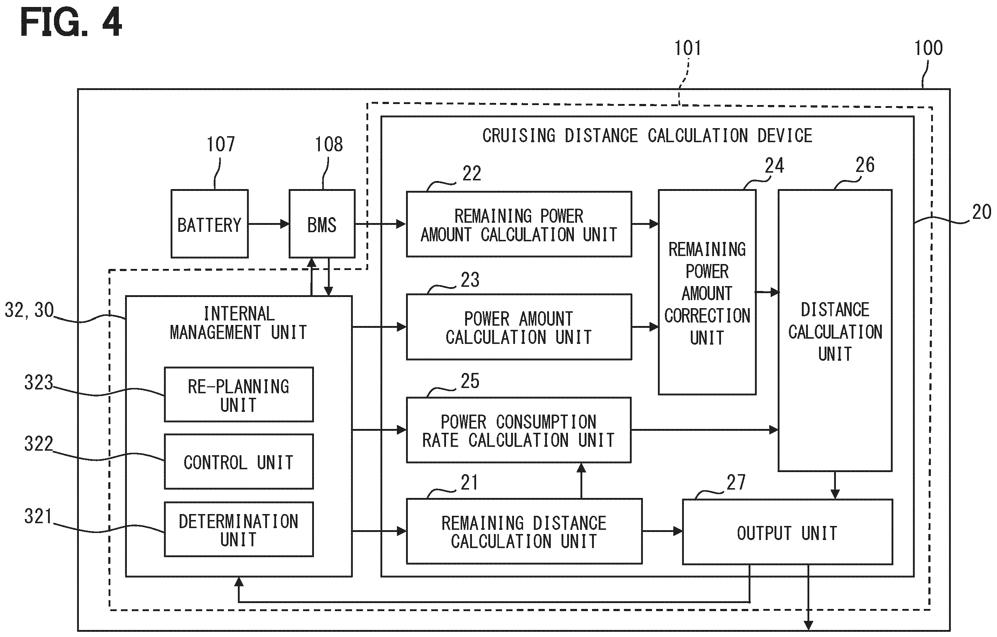

FIG. 4 shows functional blocks of the cruising distance calculation device. As an example, the distance calculation device 20 of the present embodiment includes a remaining distance calculation unit 21, a remaining power amount calculation unit 22, a power amount calculation unit 23, a remaining power amount correction unit 24, a power consumption rate calculation unit 25, a distance calculation unit 26, and an output unit 27.

The remaining distance calculation unit 21 calculates a remaining distance. The remaining distance is a scheduled cruising distance before take-off, and is a cruising distance remained during cruising, that is, a remaining cruising distance. Before the take-off, the remaining distance calculation unit 21 acquires the navigation schedule from the navigation management device 30 and calculates the scheduled cruising distance. During the cruising, the remaining distance calculation unit 21 acquires data such as a cruising position and route information of the eVTOL 100 from the navigation management device 30, and calculates the remaining cruising distance.

The remaining power amount calculation unit 22 calculates a remaining power amount of a battery 107 provided to the eVTOL 100. The remaining power amount may be referred to as a remaining battery level. The battery 107 is a rechargeable secondary battery capable of storing DC power. The secondary battery is, for example, a lithium-ion battery and a nickel-hydrogen battery. As the battery 107, a fuel cell, a generator, or the like may be used in addition to the secondary battery. The battery 107 supplies electric power to an electric propulsion unit (EPU) and an auxiliary machine which are not shown, the ECU 101, and the like. The EPU is an abbreviation of an electric propulsion unit. The EPU includes a motor and an inverter, and rotationally drives a propeller (not shown) which applies a propulsive force to the eVTOL 100.

The remaining power amount calculation unit 22 acquires data related to the battery 107 and calculates the remaining power amount. As an example, the remaining power amount calculation unit 22 acquires data related to the battery 107 from a BMS 108 which monitors a state of the battery 107. The BMS 108 is an abbreviation of a battery management system. The remaining power amount calculation unit 22 may acquire data from a sensor (not shown) which detects the state of the battery 107. The remaining power amount calculation unit 22 may be configured to communicate with the BMS 108, and acquire data from a battery ECU (not shown) which controls the battery 107.

The power amount calculation unit 23 calculates a departure and arrival power amount which is a power amount required during the departure and/or the arrival of the eVTOL 100. The power amount calculation unit 23 estimates, by calculation, the departure and arrival power amount required for a current flight (navigation). The departure and arrival power amount is a take-off power amount required in the period P1 and/or a landing power amount required in the period P3. When a flight in which charging is performed one time includes multiple times of take-off and landing, the power amount calculation unit 23 calculates a power amount required for the multiple times of take-off and landing as the departure and arrival power amount. As an example, the power amount calculation unit 23 of the present embodiment calculates the departure and arrival power amount based on history information, that is, data related to a past departure and arrival power amount.

The remaining power amount correction unit 24 acquires the remaining power amount and the departure and arrival power amount and calculates a corrected remaining power amount. As an example, the remaining power amount correction unit 24 acquires the remaining power amount from the remaining power amount calculation unit 22 and acquires the departure and arrival power amount from the power amount calculation unit 23. The corrected remaining power amount may be referred to as a corrected remaining amount. The corrected remaining power amount is a remaining power amount corrected by using the departure and arrival power amount. The remaining power amount correction unit 24 estimates the corrected remaining power amount, that is, a power amount that can be used during the cruising, by subtracting the departure and arrival power amount from the remaining power amount.

The power consumption rate calculation unit 25 calculates the power consumption rate during the cruising of the eVTOL 100. The power consumption rate calculation unit 25 calculates the power consumption rate during the cruising, for example, based on a power consumption amount and a cruising distance during past cruising. The power consumption rate calculation unit 25 may calculate the power consumption rate of the cruising, for example, based on a remaining distance of the current flight and a power consumption amount in a past flight having the same route as the current flight, which corresponds to the remaining distance of the current flight. As described above, the remaining distance is the scheduled cruising distance before the take-off and the remaining cruising distance during the cruising. The power consumption rate calculation unit 25 acquires data related to the past power consumption amount from the navigation management device 30, for example.

The distance calculation unit 26 acquires the corrected remaining power amount and calculates the cruising distance based on the corrected remaining power amount. The distance calculation unit 26 estimates the cruising distance by dividing the corrected remaining power amount by the power consumption rate during the cruising. As an example, the distance calculation unit 26 acquires the corrected remaining power amount from the remaining power amount correction unit 24, and acquires the power consumption rate during the cruising from the power consumption rate calculation unit 25.

The output unit 27 acquires a calculation result from the distance calculation unit 26 and outputs information related to the calculation result to the outside of the distance calculation device 20. As an example, the output unit 27 outputs the cruising distance to an internal display unit of the eVTOL 100. The output unit 27 may output, together with the cruising distance, at least one of the remaining cruising distance, a difference between the cruising distance and the remaining cruising distance, and a surplus degree of the cruising distance with respect to the remaining cruising distance. The output unit 27 may output the information related to the calculation result to the navigation management device 30.

As an example, the output unit 27 outputs an authentication result of the cruising distance for the navigation schedule to the navigation management device 30. The output unit 27 determines whether the cruising distance acquired from the distance calculation unit 26 satisfies the scheduled cruising distance which is based on the navigation schedule, that is, performs authentication.

The above configuration is merely an example. The distance calculation device 20 may include at least the distance calculation unit 26 and the output unit 27. The distance calculation device 20 may include at least the remaining power amount correction unit 24 and the distance calculation unit 26. The distance calculation device 20 may acquire the remaining power amount calculated by the outside, for example, the BMS 108. The distance calculation device 20 may include a remaining power amount acquisition unit instead of the remaining power amount calculation unit 22, or the remaining power amount correction unit 24 may acquire the calculated remaining power amount.

The distance calculation device 20 may acquire the remaining distance (the scheduled cruising distance, the remaining cruising distance) calculated by the outside, for example, the navigation management device 30.

The distance calculation device 20 may acquire the departure and arrival power amount (take-off and landing power amount) calculated by the outside, for example, the navigation management device 30. The distance calculation device 20 may include a power amount acquisition unit instead of the power amount calculation unit 23, or the remaining power amount correction unit 24 may acquire the calculated departure and arrival power amount.

The distance calculation device 20 may acquire the corrected remaining power amount calculated by the outside, for example, the navigation management device 30. The distance calculation device 20 may acquire the power consumption rate during the cruising calculated by the outside, for example, the navigation management device 30. The distance calculation device 20 may include a power consumption rate acquisition unit instead of the power consumption rate calculation unit 25, or the distance calculation unit 26 may acquire the calculated power consumption rate.

### <Navigation Management Device>

As shown in FIG. 4, as an example, the internal management unit 32 of the navigation management device 30 includes a determination unit 321, a control unit 322, and a re-planning unit 323.

The determination unit 321 compares the cruising distance with a threshold which is based on the remaining cruising distance, and determines whether the cruising distance is equal to or larger than the threshold. The navigation management device 30 performs a process corresponding to the determination result.

The control unit 322 controls an EPU or an auxiliary machine (not shown) of the eVTOL 100. The control unit 322 may control, for example, driving of an inverter and hence a motor constituting the EPU according to a control signal from a flight control device (not shown) provided to the eVTOL 100. The control unit 322 may perform flight control. In this case, the control unit 322 executes various processes related to the flight control. The various processes include, for example, a process of generating a control signal indicating a target rotation speed of the propeller, in order to implement an instructed flight state. Further, the various processes include a process of generating a control signal indicating a target tilt angle of the propeller, and a process of generating a control signal indicating a target position of a flap (not shown) for adjusting lift of the eVTOL 100. The control unit 322 executes the above-described various processes, and causes the eVTOL 100 to fly in a flight state corresponding to an operation of the operator or a remote operation of the control system.

The control unit 322 controls, for example, an air conditioner as the auxiliary machine. The control unit 322 acquires, from each sensor mounted in the eVTOL 100, inside air information indicating an internal temperature and humidity and outside air information indicating an external temperature and humidity. The control unit 322 acquires setting information such as a set temperature set by an input terminal. The control unit 322 controls the air conditioner based on the inside air information, the outside air information, and the setting information. The control unit 322 switches a control mode of the EPU or the auxiliary machine according to the determination result of the determination unit 321.

As a result of the determination by the determination unit 321, when it is necessary to re-plan the navigation schedule, the re-planning unit 323 executes a re-planning process. Instead of the configuration shown in FIG. 4, the external management unit 31 may have a function of executing the re-planning process.

### <Navigation Management Method>

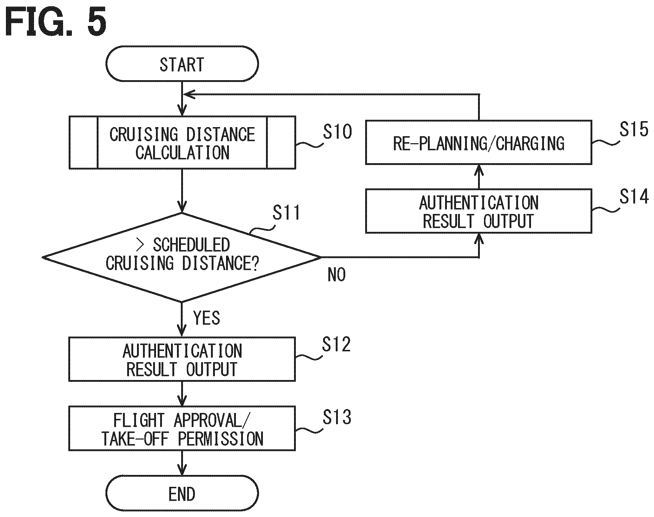

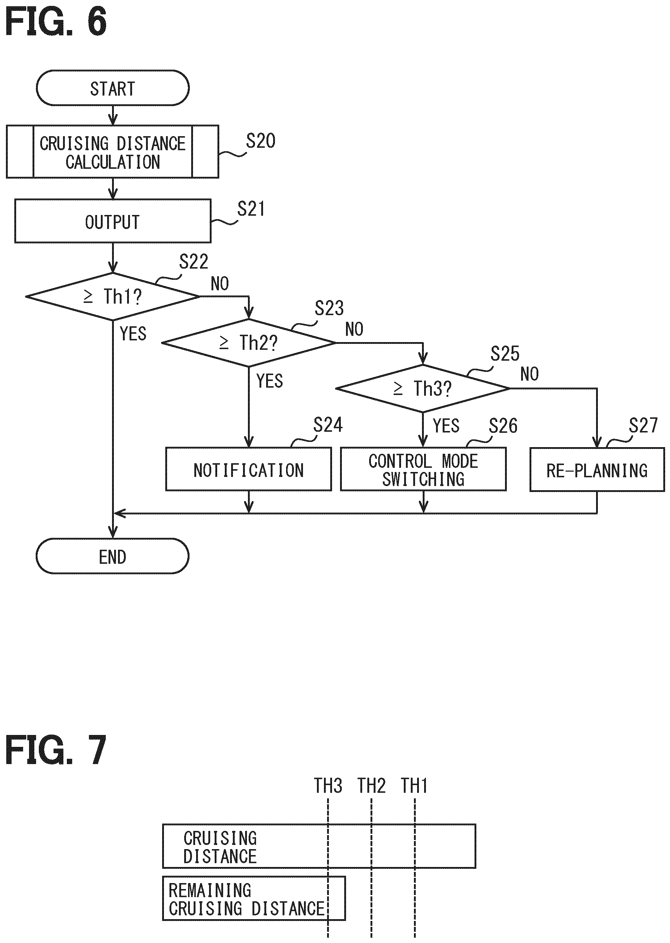

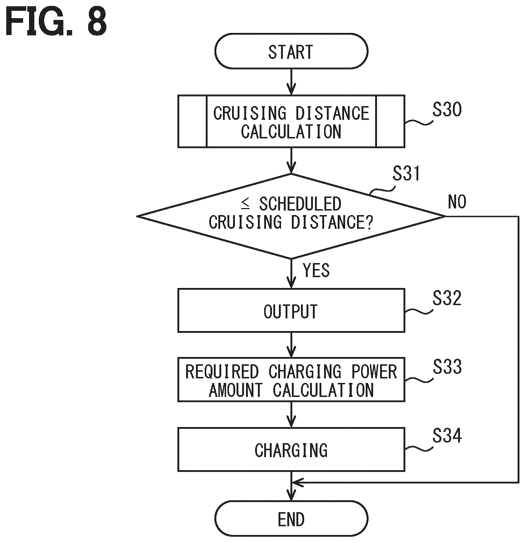

FIG. 5 shows a process to be performed by the navigation management system during planning of the navigation schedule or before the take-off. FIG. 6 shows a process to be executed by the navigation management system during the cruising. FIG. 7 is a diagram showing a threshold set by the navigation management system. FIG. 8 shows a process to be executed by the navigation management system during charging. The execution of the programs 106 and 116 for navigation management by the processors 102 and 112 corresponds to execution of a navigation management method. At least a part of the programs 106 and 116 for the navigation management may be stored in the corresponding storages 104 and 114 using, for example, an OTA technique. The OTA is an abbreviation of over the air.

The navigation management system 10 executes the process shown in FIG. 5 during planning of the navigation schedule or before the take-off. First, the distance calculation device 20 performs cruising distance calculation processing (step S10). The distance calculation device 20 calculates the scheduled cruising distance together with the cruising distance. The calculation of the cruising distance will be described later.

Next, the distance calculation device 20 determines whether the cruising distance satisfies the scheduled cruising distance, that is, performs authentication (step S11).

When the cruising distance is larger than the scheduled cruising distance in step S11, the distance calculation device 20 outputs an authentication result indicating that the cruising distance satisfies the navigation schedule to the navigation management device 30 (step S12).

When acquiring the authentication result indicating that the navigation schedule is satisfied, for example, the external management unit 31 of the navigation management device 30 approves the flight or permits the take-off (step S13). Instead of the external management unit 31, the internal management unit 32 may perform the processing of step S13. Then, the navigation management system 10 ends the series of processing.

On the other hand, when the cruising distance is smaller than the scheduled cruising distance, the distance calculation device 20 outputs an authentication result indicating that the cruising distance does not satisfy the navigation schedule to the navigation management device 30 (step S14). The processing in steps S11, S12, and S14 corresponds to the output unit 27.

When acquiring the authentication result, the navigation management device 30 performs processing of re-planning the navigation schedule or processing of charging the battery 107 (step S15). After performing step S15, the navigation management system 10 performs the processing in and after step S10 again. The navigation management device 30 re-plans the navigation schedule, and performs the processing in and after step S10 again when the re-planning is completed. The navigation management device 30 transmits a charging instruction signal to, for example, a charger (not shown) and/or the target eVTOL 100, and performs the processing in and after step S10 again when receiving a charging completion signal.

The navigation management system 10 repeatedly performs the process shown in FIG. 6 at predetermined intervals during the cruising of the eVTOL 100, that is, during the period P2. First, the distance calculation device 20 executes the cruising distance calculation processing (step S20). The distance calculation device 20 calculates the remaining cruising distance together with the cruising distance. The calculation of the cruising distance will be described later.

Next, the distance calculation device 20 outputs information related to the calculation result (step S21). The distance calculation device 20 outputs the cruising distance to the internal display unit of the eVTOL 100. The output unit 27 may output, together with the cruising distance, at least one of the remaining cruising distance, the difference between the cruising distance and the remaining cruising distance, and the surplus degree of the cruising distance with respect to the remaining cruising distance, to the internal display unit. The distance calculation device 20 outputs the cruising distance and the remaining cruising distance to the navigation management device 30 as the information related to the calculation result.

Next, the determination unit 321 of the internal management unit 32 sets a threshold based on the remaining cruising distance and compares the threshold with the cruising distance. As shown in FIG. 7, the determination unit 321 sets a first threshold Th1, a second threshold Th2, and a third threshold Th3 as thresholds related to the distance. A relationship in length is the first threshold Th1 ≥ the second threshold Th2 > the third threshold Th3. The second threshold Th2 may be equal to the first threshold Th1. As an example, in FIG. 7, the second threshold Th2 is smaller than the first threshold Th1. The first threshold Th1 and the second threshold Th2 are larger than the remaining cruising distance. The third threshold Th3 is, for example, equal to or smaller than the remaining cruising distance. Each of the first threshold Th1, the second threshold Th2, and the third threshold Th3 may be set, for example, by adding a preset value to the remaining cruising distance. The third threshold Th3 is set by adding a negative value. Each of the thresholds may be set by multiplying the remaining cruising distance by a preset ratio.

First, the determination unit 321 compares the first threshold Th1 with the cruising distance and determines whether the cruising distance is equal to or larger than the first threshold Th1 (step S22). When the cruising distance is equal to or larger than the first threshold Th1, the remaining power amount of the battery 107 is determined to have no problem for the navigation, and the series of processing is ended.

When the cruising distance is smaller than the first threshold Th1, the determination unit 321 compares the second threshold Th2 with the cruising distance, and determines whether the cruising distance is equal to or larger than the second threshold Th2 (step S23). When the cruising distance is equal to or larger than the second threshold Th2, the control unit 322 performs notification processing (step S24) to an inside of the eVTOL 100 and/or the ground station 110, and ends the series of processing. The notification processing is processing of calling for attention. By the notification processing, a warning is displayed on an internal display device. The notification to the ground station 110 is particularly effective in a case of the unmanned aircraft.

When the cruising distance is smaller than the second threshold Th2, the determination unit 321 compares the third threshold Th3 with the cruising distance, and determines whether the cruising distance is equal to or larger than the third threshold Th3 (step S25). When the second threshold Th2 is larger than the cruising distance and the cruising distance is equal to or larger than the third threshold Th3, the control unit 322 switches a control mode (step S26) to reduce the power consumption of the eVTOL 100, and ends the series of processing. The control unit 322 switches the control mode of the EPU from a normal mode to a power saving mode, for example, within a range in which no problem occurs on the navigation schedule. The control unit 322 switches the control mode of the auxiliary machine such as the air conditioner from the normal mode to the power saving mode. In the power saving mode, the control unit 322 stops the auxiliary machine for a certain period of time, for example, within a range in which no problem occurs even if the stop is performed.

When the cruising distance is smaller than the third threshold Th3, the re-planning unit 323 of the navigation management device 30 re-plans the navigation schedule (step S27), and ends the series of processing. The re-planning unit 323 changes the route and/or altitude to an optimum route and/or altitude, for example, in order to reduce the power consumption rate during the cruising. The re-planning unit 323 lowers the cruising altitude in order to reduce the landing power amount, for example. When the cruising distance is smaller than the third threshold Th3 even in the re-planned navigation schedule, the re-planning unit 323 selects an emergency landing destination such as a neighboring charging spot, and notifies the emergency landing destination to obtain permission for the landing. When the permission is obtained, the navigation schedule is re-planned to land at the emergency landing destination.

The navigation management system 10 executes the process shown in FIG. 8 during charging. First, the distance calculation device 20 executes the cruising distance calculation processing (step S30). The distance calculation device 20 calculates the scheduled cruising distance together with the cruising distance. The calculation of the cruising distance will be described later.

Next, the distance calculation device 20 determines whether the cruising distance is equal to or smaller than the scheduled cruising distance (step S31). When the cruising distance is larger than the scheduled cruising distance, the navigation management system 10 ends the series of processing.

When the cruising distance is equal to or smaller than the scheduled cruising distance, the distance calculation device 20 outputs the information related to the determination result to the navigation management device 30 (step S32). The processing in steps S31 and S32 corresponds to the output unit 27.

When acquiring the information related to the determination result, the navigation management device 30 calculates a charging power amount required for the cruising distance to exceed the scheduled cruising distance (step S33). Next, the navigation management device 30 performs the processing of charging the battery 107 to charge by the calculated charging power amount (step S34), and ends the series of processing.

### <Cruising Distance Calculation Method>

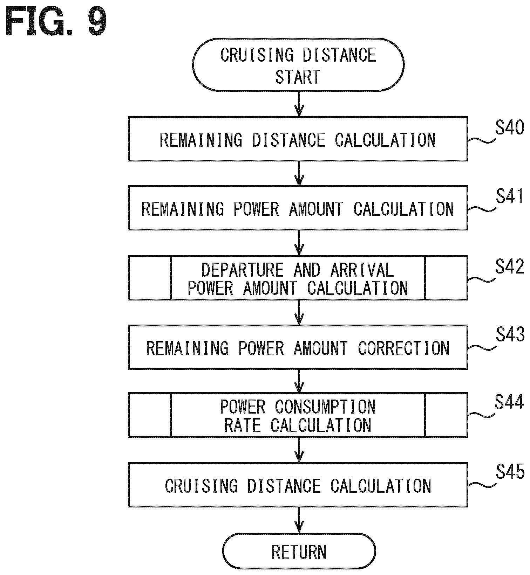

FIG. 9 shows the processing in steps S10, S20, and S30, that is, a cruising distance calculation method. The cruising distance calculation method is obtained by excluding the output processing from the processing executed by the cruising distance calculation device 20.

As shown in FIG. 9, the distance calculation device 20 first calculates the remaining distance (step S40). The processing in step S40 corresponds to the remaining distance calculation unit 21. The distance calculation device 20 acquires the navigation schedule from the navigation management device 30 and calculates the scheduled cruising distance before the take-off including flight planning. During the cruising, the distance calculation device 20 acquires data such as the cruising position and the route information of the eVTOL 100 from the navigation management device 30, and calculates the remaining cruising distance.

Next, the distance calculation device 20 calculates the remaining power amount of the battery 107, that is, the remaining battery level (step S41). The processing in step S41 corresponds to the remaining power amount calculation unit 22. The distance calculation device 20 acquires data related to the battery 107 from the BMS 108, for example, and calculates the remaining power amount based on the acquired data.

The distance calculation device 20 calculates the remaining power amount by a known method. The distance calculation device 20 may calculate the remaining power amount based on, for example, a state of charge (SOC) and a full charge capacity. The distance calculation device 20 may calculate the remaining power amount based on, for example, an internal resistance value, an open circuit voltage (OCV), and a battery temperature of each of multiple battery cells constituting the battery 107. The SOC is an abbreviation of the state of charge. The OCV is an abbreviation of the open circuit voltage.

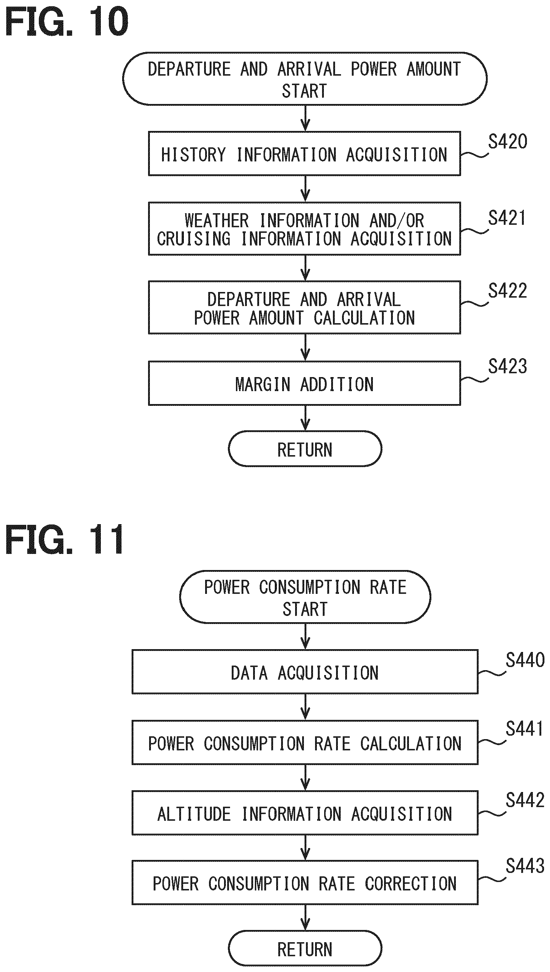

Next, the distance calculation device 20 calculates the departure and arrival power amount (step S42). The processing in step S42 corresponds to the power amount calculation unit 23. FIG. 10 shows a method for calculating the departure and arrival power amount.

First, the distance calculation device 20 acquires history information, that is, data related to the past departure and arrival power amount (step S420). The distance calculation device 20 acquires the history information from the navigation management device 30, for example. The history information may be an absolute value of the power consumption amount during the departure and/or the arrival, or may be a power profile. The navigation management device 30 collects the history information from each aircraft and/or each ground station 110 and stores the history information into a storage.

As the history information, for example, history information of a target departure point and/or a target arrival point of the current flight is preferable. As the history information, history information of the same model as the own aircraft is preferable. It is more preferable to use the history information of the target departure point and/or arrival point of the current flight in the same model as the own aircraft. The history information of the same model may or may not include data of the own aircraft. Of course, as the history information, only the history information of the own aircraft may be used.

Next, the distance calculation device 20 acquires weather information and/or cruising information (step S421). The distance calculation device 20 acquires information on an element which affects the take-off and landing. The distance calculation device 20 acquires the information from, for example, the external management unit 31 (ground station 110) of the navigation management device 30. The weather information is weather information at the take-off point and/or the landing point. The weather information may include an atmospheric pressure, a wind speed, an amount of rain and snow, and the like at each altitude. The cruising information may include a cruising altitude, a loaded weight, or the like of the eVTOL 100.

The distance calculation device 20 calculates the departure and arrival power amount based on the acquired information (step S422). The distance calculation device 20 estimates the departure and arrival power amount using a map or a regression model created based on the acquired history information. However, when a variation in the absolute value of the power consumption amount is within a predetermined range, that is, when the variation is small, the distance calculation device 20 may set a maximum value of the variation or the like as the departure and arrival power amount. When the power profile is within a predetermined range, that is, when a change in the required power is small, the distance calculation device 20 may set the departure and arrival power amount by multiplying a maximum power value in the profile and an output time, for example.

In the present embodiment, the departure and arrival power amount is calculated in consideration of the weather information and/or the cruising information. When a weather condition is severe, for example, a difficulty level of the take-off and landing is high, and a time required for the take-off and landing increases. The higher the cruising altitude is, the longer a movement distance in the vertical direction is. The difficulty level increases. Therefore, the higher the cruising altitude is, the longer the time required for the take-off and landing is. The larger the loaded weight is, a higher output is required. The difficulty level increases. Therefore, the larger the loaded weight is, the longer the time required for the take-off and landing is.

The distance calculation device 20 of the present embodiment creates a map or a multiple regression model by adding the weather information and the cruising information to the history information, and estimates the departure and arrival power amount. That is, the departure and arrival power amount is corrected in consideration of the weather information and/or the cruising information. Alternatively, after the departure and arrival power amount is calculated based on the history information, the calculated departure and arrival power amount may be corrected based on the weather information and/or the cruising information.

In a case where one time of take-off and landing with, for example, charging of one time is planned, the departure and arrival power amount calculated before the take-off is a sum of a power amount required for one time of take-off and a power amount required for one time of landing. In a case where take-off and landing at multiple points with charging of one time is planned, the departure and arrival power amount is a sum of power amounts of multiple times of take-off and power amounts of multiple times of landing. In a case where, for example, one time of take-off and landing is planned, the departure and arrival power amount calculated during the cruising is a power amount required for one time of landing. The departure and arrival power amount is a power amount required for the take-off and landing.

Next, the distance calculation device 20 adds a margin to the calculated departure and arrival power amount (step S423), and ends the series of processing. The margin indicates, for example, a predetermined surplus degree. The margin is, for example, a power amount required to retry landing a predetermined number of times or more, that is, a reserve power amount.

The margin may be set according to a skill level of the pilot. For example, the margin is decreased as the skill level increases, and the margin is increased as the skill level decreases. The skill level can be set based on information of the pilot received from the terminal when the navigation schedule is planned, for example, information such as navigation experience and the number of times of navigation.

When calculating the departure and arrival power amount, the distance calculation device 20 calculates the corrected remaining power amount as shown in FIG. 9 (step S43). The processing in step S43 corresponds to the remaining power amount correction unit 24. The distance calculation device 20 calculates the corrected remaining power amount based on the remaining power amount calculated in step S41 and the departure and arrival power amount calculated in step S42. The distance calculation device 20 estimates the corrected remaining power amount, that is, a power amount that can be used during the cruising, by subtracting the departure and arrival power amount from the remaining power amount.

Next, the distance calculation device 20 calculates the power consumption rate during the cruising (step S44). The processing in step S44 corresponds to the power consumption rate calculation unit 25. FIG. 11 shows a method for calculating the power consumption rate.

First, the distance calculation device 20 acquires data necessary for calculating the power consumption rate during the cruising (period P2) (step S440). The distance calculation device 20 acquires, for example, the power consumption amount during the past cruising from the navigation management device 30.

As the past power consumption amount, it is preferable to use past data in which the navigation conditions substantially match or are close to those of the current flight. Of course, the past data may be data of the own aircraft. The past data is not limited to the data of the own aircraft, and may be past data in which the travel route is the same as that of the current flight. The past data may be past data of the same model as the own aircraft. For example, past data of the same model with the same travel route under close weather conditions is preferable. The past data of the same model may or may not include data of the own aircraft. When the power consumption rate is calculated in the middle of the cruising period, the power consumption amount up to the middle of the cruising period may be used as the past data.

The distance calculation device 20 may estimate the power consumption amount during the cruising by a method similar to the calculation of the departure and arrival power amount. That is, the distance calculation device 20 may acquire the absolute value of the power consumption amount or the power profile during the past cruising and estimate the power consumption amount using a map or a regression model created based on the acquired information.

Next, the distance calculation device 20 calculates the power consumption rate during the cruising (step S441). The distance calculation device 20 estimates a cruising power consumption rate of the current flight, for example, by dividing the cruising distance during the past cruising by the power consumption amount. Alternatively, for example, the distance calculation device 20 may estimate the cruising power consumption rate of the current flight, for example, by dividing the remaining distance of the current flight by the power consumption amount in a past flight having the same route as the current flight, which corresponds to the remaining distance of the current flight. The distance calculation device 20 uses the scheduled cruising distance before the take-off as the remaining distance, and uses the remaining cruising distance during the cruising as the remaining distance.

Next, the distance calculation device 20 acquires altitude information (step S442). The altitude information is, for example, information related to the cruising altitude and/or a variation in the cruising altitude. The altitude information may be, for example, an absolute value of the cruising altitude or a profile of the cruising altitude. The distance calculation device 20 may acquire the altitude information which is based on the navigation schedule from the navigation management device 30, for example. In the middle of the cruising period, the distance calculation device 20 may acquire, from the navigation management device 30, the altitude information in the cruising period up to now.

Next, the distance calculation device 20 corrects the power consumption rate based on the acquired altitude information (step S443), and ends the series of processing. A density of air that affects the power consumption rate, that is, an air resistance, changes depending on the cruising altitude. The higher the cruising altitude is, the smaller the air resistance is, and the power consumption rate is improved. The variation in the cruising altitude is accompanied by a variation in the output. Therefore, in the present embodiment, the power consumption rate is corrected based on the altitude information.

After calculating the power consumption rate, the distance calculation device 20 calculates the cruising distance as shown in FIG. 9 (step S45). The processing in step S45 corresponds to the distance calculation unit 26. The distance calculation device 20 estimates the cruising distance by dividing the corrected remaining power amount calculated in step S43 by the power consumption rate calculated in step S44.

The above-described cruising distance calculation method is merely an example. The cruising distance calculation method may include at least the calculation of the corrected remaining power amount in step S43 and the calculation of the cruising distance in step S45. For example, the navigation management device 30 may be configured to calculate the corrected remaining power amount, and the corrected remaining power amount may be acquired in step S43.

The navigation management device 30 may be configured to calculate the remaining distance, and the remaining distance may be acquired in step S40. In this case, only the cruising distance may be output to the navigation management device 30 in step S21. The BMS 108 or the navigation management device 30 may be configured to calculate the remaining power amount of the battery 107, and the remaining power amount may be acquired in step S41.

The navigation management device 30 may be configured to calculate the departure and arrival power amount, and the departure and arrival power amount may be acquired in step S42. The navigation management device 30 may be configured to calculate the power consumption rate, and the power consumption rate may be acquired in step S44.

### <Summary of First Embodiment>

As shown in FIG. 1, the electric moving object such as the eVTOL 100 which moves in the horizontal direction and the vertical direction is required to provide a high output continuously for a predetermined time during the departure or the arrival in which a movement having a vertical direction component is performed. That is, a proportion of the departure and arrival power amount to the total power amount of the battery 107 is high. Since the output is high or the power amount is high, an error is likely to occur in the departure and arrival power amount.

According to the distance calculation device 20 (cruising distance calculation device 20) of the present embodiment, the corrected remaining power amount is used to calculate the cruising distance. The corrected remaining power amount is obtained by correcting the remaining power amount of the battery 107 with the departure and arrival power amount required during the departure and/or the arrival of the electric moving object. As a result, accuracy of estimating the cruising distance can be improved for the electric moving object which moves in the horizontal direction and the vertical direction.

The departure and arrival power amount may be a value set in advance (predetermined value). However, the power profile during the departure and/or the arrival may vary depending on characteristics of the departure point and the arrival point, the skill level of the operator, and the like. As an example, the distance calculation device 20 has a function of calculating the departure and arrival power amount. The distance calculation device 20 calculates the departure and arrival power amount based on the history information, that is, data related to the past departure and arrival power amount. Taking an influence of the variation elements into consideration by using the history information, accuracy of the departure and arrival power amount and hence accuracy of the cruising distance can be improved. For example, the accuracy of the cruising distance can be improved even for a travel route used for a first time.

The characteristics of the departure point and the arrival point are, for example, a wind direction, a wind speed, an atmospheric pressure, weather, and the like. These characteristics affect the difficulty level in the departure (take-off) and the arrival (landing). As an example, the distance calculation device 20 calculates the departure and arrival power amount using the history information including information related to the past departure and arrival power amount at the target departure point and/or arrival point. That is, the departure and arrival power amount is calculated in consideration of the difficulty level of the point. The history information may also include data of other aircrafts. Accordingly, the accuracy of the cruising distance can be further improved.

Ease of operation, output characteristics, and the like vary depending on the model (type) of the electric moving object. As an example, the distance calculation device 20 calculates the departure and arrival power amount using the history information including information related to the past departure and arrival power amount in the same model as the electric moving object. Accordingly, the accuracy of the departure and arrival power amount can be improved, and hence the accuracy of the cruising distance can be further improved. It is more preferable to use the history information of the target departure point and/or arrival point of the current flight in the same model as the own aircraft.

Depending on the weather condition, the difficulty level of the departure or the arrival differs. The difficulty level of the departure or the arrival differs depending on cruising conditions such as the cruising altitude and the loaded weight. As an example, the distance calculation device 20 corrects the departure and arrival power amount based on the weather information of the target departure point and/or arrival point and/or the cruising information. Accordingly, the accuracy of the departure and arrival power amount, and hence the accuracy of the cruising distance can be further improved.

The density of air that affects the power consumption rate, that is, the air resistance, changes depending on the cruising altitude. The higher the cruising altitude is, the smaller the air resistance is. The variation in the cruising altitude is accompanied by the variation in the output. As an example, the distance calculation device 20 has a function of calculating the power consumption rate during the cruising, and corrects the power consumption rate based on the altitude or the altitude variation during the cruising. Accordingly, accuracy of the power consumption rate can be improved, and hence the accuracy of the cruising distance can be further improved.

The navigation management system 10 of the present embodiment includes the navigation management device 30 and the above-described distance calculation device 20. The distance calculation device 20 uses the corrected remaining power amount to calculate the cruising distance. As a result, the accuracy of estimating the cruising distance can be improved for the electric moving object which moves in the horizontal direction and the vertical direction.

As an example, when the cruising distance falls below the first threshold Th1 which is based on the remaining cruising distance, the navigation management device 30 displays a warning inside the electric moving object and/or notifies the ground station. By calling for attention at an early stage using the calculation result of the cruising distance, reduction of power consumption is promoted. Accordingly, a risk of shortage of power for reaching the destination can be reduced.

As an example, when the cruising distance falls below the second threshold Th2 which is a value based on the remaining cruising distance and which is equal to or smaller than the first threshold Th1, the navigation management device 30 controls power inside the electric moving object to reduce power consumption of the electric moving object. That is, the control is switched to reduce the power consumption. Accordingly, the surplus degree of the cruising distance is increased, and the risk of shortage of power can be reduced.

When the cruising distance falls below the third threshold Th3 which is a value based on the remaining cruising distance and which is smaller than the second threshold Th2, the navigation management device 30 re-plans the navigation schedule of the electric moving object. Since the navigation schedule is immediately re-planned when the cruising distance falls below the third threshold Th3, an emergency response can be speeded up.

As an example, the distance calculation device 20 performs authentication on the cruising distance for the navigation schedule during planning of the navigation schedule of the electric moving object or before the departure, and outputs an authentication result. When acquiring the authentication result in which the cruising distance satisfies the navigation schedule, the navigation management device 30 approves the navigation schedule or permits the departure. In this way, the distance calculation device 20 performs authentication on the calculated cruising distance. Accordingly, the navigation management device 30 can efficiently approve the navigation schedule and permit the departure.

The navigation management device 30 manages charging of the electric moving object such that the cruising distance satisfies the navigation schedule. Since the navigation management device 30 manages the navigation of the electric moving object, charging management can also be efficiently performed. The charging management according to the navigation schedule is possible.

The program 106 of the present embodiment is applied to the electric moving object which moves in the horizontal direction and the vertical direction. The program 106 includes causing at least one processor 102 (processing unit) to calculate the cruising distance based on the corrected remaining power amount obtained by correcting the remaining power amount of the battery 107 with the departure and arrival power amount, and outputting information related to the calculation result. The program 106 uses the corrected remaining power amount to calculate the cruising distance. As a result, the accuracy of estimating the cruising distance can be improved for the electric moving object which moves in the horizontal direction and the vertical direction.

### (Second Embodiment)

This embodiment is a modification of a basic aspect of the preceding embodiment, and the description of the preceding embodiment can be incorporated. In the preceding embodiment, the cruising distance calculation device is functionally disposed in the ECU. Alternatively, the cruising distance calculation device may be functionally disposed in a computer other than the ECU.

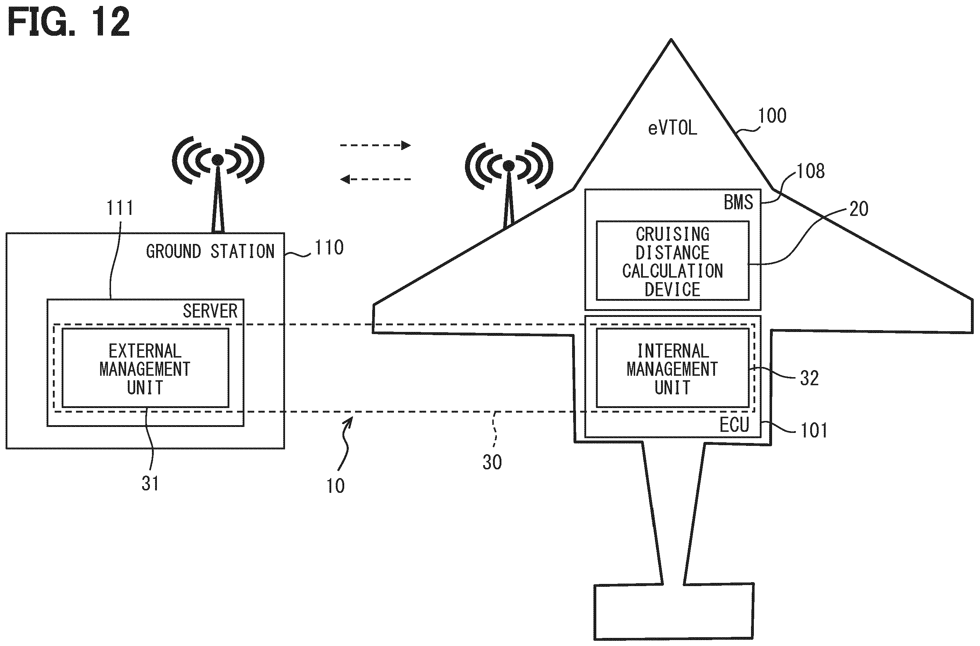

FIG. 12 shows a functional arrangement of the navigation management system 10 according to the present embodiment. The cruising distance calculation device 20 is functionally disposed in the BMS 108. The BMS 108 also includes a processor, a RAM, and a storage storing a program, which are not shown. As in the preceding embodiment, the external management unit 31 of the navigation management device 30 is functionally disposed in the server 111 of the ground station 110. The internal management unit 32 is functionally disposed in the ECU 101. Other configurations are the same as those described in the preceding embodiment.

### <Summary of Second Embodiment>

In the present embodiment, in the eVTOL 100, the distance calculation device 20 is disposed in the BMS 108, and the internal management unit 32 of the navigation management device 30 is disposed in the ECU 101. In the configuration in which the functions are shared as described above, the same effect as the configuration described in the preceding embodiment can also be obtained.

For example, the distance calculation device 20 functionally disposed in the BMS 108 uses the corrected remaining power amount to calculate the cruising distance. Accordingly, the accuracy of estimating the cruising distance can be improved for the electric moving object which moves in the horizontal direction and the vertical direction.

### <Modification>

As described in the preceding embodiment, at least a part of the functions of the navigation management system 10 may be disposed in the internal computer of the eVTOL 100. At least a part of the functions of the navigation management system 10 may be arranged in an external computer that can wirelessly communicate with the eVTOL 100. All of the functions may be arranged in the eVTOL 100, or all of the functions may be arranged in the server 111 of the ground station 110.

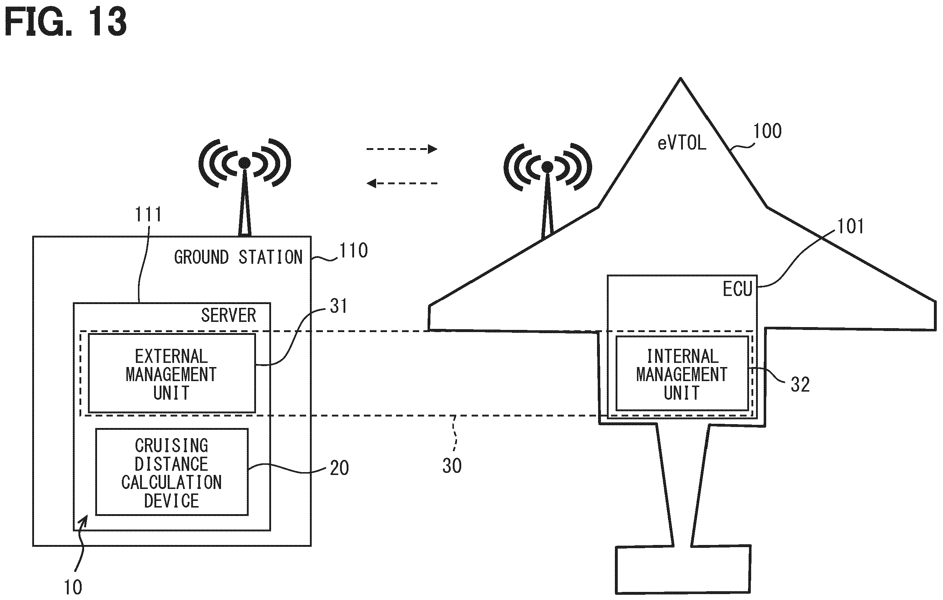

For example, as shown in FIG. 13, the cruising distance calculation device 20 may be functionally disposed in the server 111 of the ground station 110. In FIG. 13, the cruising distance calculation device 20 and the external management unit 31 are disposed in the server 111. The internal management unit 32 is disposed in the ECU 101 of the eVTOL 100.

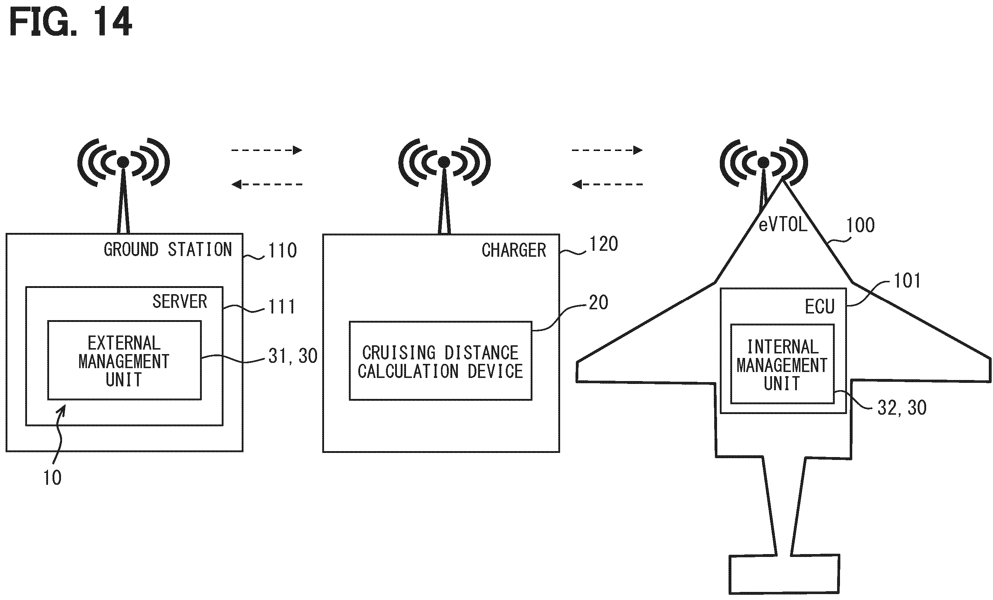

As shown in FIG. 14, the cruising distance calculation device 20 may be functionally disposed in an external computer (not shown) of a charger 120. In FIG. 14, the internal management unit 32 is disposed in the ECU 101, and the external management unit 31 is disposed in the server 111. The charger 120 is used to charge the battery 107 of the eVTOL 100. Unlike the ground station 110, the charger 120 does not wirelessly communicate with the eVTOL 100 after the take-off. Accordingly, the distance calculation device 20 disposed in the charger 120 performs calculation during the flight planning, before the take-off, and during the charging.

### (Third Embodiment)

This embodiment is a modification of a basic aspect of the preceding embodiment, and the description of the preceding embodiment can be incorporated. In the preceding embodiment, the departure and arrival power amount is calculated based on the history information. Alternatively, the departure and arrival power amount may be calculated based on SOC dependence of a maximum output of the battery.

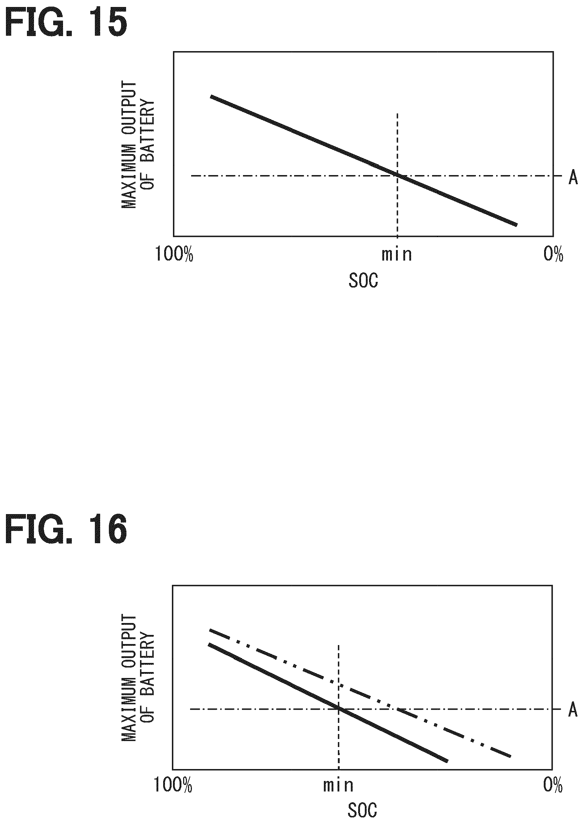

FIG. 15 shows the SOC dependence of the maximum output of the battery which can be output continuously for a predetermined time. min shown in FIG. 15 is a minimum SOC at which an output A required for the take-off and landing can be output continuously for a predetermined time, that is, a power amount required for the take-off and landing can be secured. For example, when min is 30%, the take-off and landing is possible at an SOC of 30% or more. The take-off and landing is not possible at an SOC of less than 30%.

The distance calculation device 20 (power amount calculation unit 23) includes, for example, a map indicating the SOC dependence of the maximum output of the battery 107, the output A, and the predetermined time in advance, and estimates the minimum SOC, and hence the departure and arrival power amount by calculation. The map, the output A, and the time are set based on, for example, data acquired during a test. Other configurations are the same as those described in the preceding embodiment.

### <Summary of Third Embodiment>

An output performance of the battery 107 is affected by, for example, the SOC. Therefore, the departure and arrival power amount is likely to vary according to the SOC. In the present embodiment, the distance calculation device 20 calculates the departure and arrival power amount based on the SOC dependence of the maximum output of the battery 107. Accordingly, the departure and arrival power amount can be calculated by a simpler method than using the history information.

Indication of the SOC dependence of the maximum output of the battery 107 is not limited to the map. The departure and arrival power amount may be estimated using a battery model. The power profile (map) is not limited to the example described above. Although an example in which the predetermined time and the power are constant has been described, the present invention is not limited thereto. The calculation may be performed based on a power profile which varies with time. In this case, the departure and arrival power amount may be obtained by integration, that is, interval integration.

### <Modification>

As shown in FIG. 16, the output performance of the battery 107 is affected by the battery temperature and battery deterioration. A solid line shown in FIG. 16 indicates a state in which the battery temperature decreases or the battery deteriorates as compared with a two-dot chain line. When the battery temperature decreases, the internal resistance of the battery 107 increases and the output decreases. Similarly, when the battery 107 deteriorates, the internal resistance increases and the output decreases. In this way, the minimum SOC required to continuously output the output A for the predetermined time varies in response to the battery temperature and the battery degradation. For example, due to the temperature decrease, the minimum SOC is increased as compared with that before the temperature decrease. Accordingly, the departure and arrival power amount may be corrected based on the battery temperature or the battery degradation. Accordingly, accuracy of estimating the departure and arrival power amount can be improved.

The calculation method described in the present embodiment may be combined with the method for calculating the departure and arrival power amount described in the preceding embodiment. Accordingly, a synergistic effect can be expected. For example, the departure and arrival power amount may be calculated based on the history information, and the departure and arrival power amount may be corrected based on the battery temperature or the battery degradation.

### (Other Embodiments)

The disclosure in the descriptions, the drawings, and the like is not limited to the illustrated embodiments. The disclosure encompasses the illustrated embodiments and modifications thereof made by those skilled in the art. For example, the disclosure is not limited to combinations of components and/or elements described in the embodiments. The disclosure may be implemented in various combinations. The disclosure may include additional portions that can be added to the embodiments. The disclosure encompasses omission of the components and/or the elements of the embodiments. The disclosure encompasses the replacement or combination of the components and/or the elements between one embodiment and another. The disclosed technical scope is not limited to those described in the embodiments. The several technical scopes disclosed are indicated by the description of the claims, and should be construed to include all modifications within the meaning and range equivalent to the description of the claims.

The disclosure in the descriptions, the drawings, and the like is not limited by the description of the claims. The disclosure in the descriptions, the drawings, and the like encompasses the technical ideas described in the claims, and extends to technical ideas that are more diverse and extensive than the technical ideas described in the claims. Accordingly, various technical ideas can be extracted from the disclosure of the descriptions, the drawings, and the like without being restricted by the description of the claims.

When it is mentioned that a certain element or layer is "on", "coupled", "connected", or "bonded", the certain element or layer may be directly on, coupled, connected, or bonded to another element or layer, or an interposed element or an interposed layer may be present. In contrast, when it is mentioned that a certain element is "directly on", "directly coupled", "directly connected", or "directly bonded" to another element or layer, no interposed element or interposed layer is present. Other words used to describe a relationship between elements should be interpreted in the similar manner (for example, "between" and "directly between", "adjacent to" and "directly adjacent to"). When used in the description, the term "and/or" includes any of and all combinations related to one or multiple associated listed items.

Each of the various flowcharts shown in the present disclosure is an example, and the number of steps constituting the flowchart and the execution order of the process can be appropriately changed. The device, the system, and the method described in the present disclosure may be implemented by a dedicated computer constituting a processor that is programmed to execute one or multiple functions implemented by a computer program. The device and the method described in the present disclosure may be implemented using a dedicated hardware logic circuit. Further, the device and the method described in the present disclosure may be implemented by one or multiple dedicated computers implemented by a combination of a processor that executes a computer program and one or more hardware logic circuits.

For example, a part or all of the functions of the processor 102 may be implemented as hardware. An aspect in which a certain function is implemented as hardware includes an aspect in which one or multiple ICs are used. As the processor (arithmetic core), a CPU, an MPU, a GPU, a DFP, or the like can be adopted. The CPU is an abbreviation of a central processing unit. The MPU is an abbreviation of a micro-processing unit. The GPU is an abbreviation of a graphics processing unit. The DFP is an abbreviation of a data flow processor.

A part or all of the functions of the processor 102 may be implemented by combining multiple types of calculation processing devices. A part or all of the functions of the processor 102 may be implemented using an SoC, an ASIC, an FPGA, or the like. The SoC is an abbreviation of a system-on chip. The ASIC is an abbreviation of an application specific integrated circuit. The FPGA is an abbreviation of a field programmable gate array. The same applies to the processor 112.

The computer program may be stored in a computer-readable non-transitionary tangible recording medium (non-transitory tangible storage medium) as an instruction to be executed by the computer. As the program storage medium, an HDD, an SSD, a flash memory, or the like can be adopted. The HDD is an abbreviation of a hard disk drive. The SSD is an abbreviation of a solid state drive. A program for causing a computer to function as the cruising distance calculation device 20 or the navigation management device 30, and a non-transitory tangible recording medium such as a semiconductor memory in which the program is recorded are also included in the scope of the present disclosure.

### (Disclosure of Technical Ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

A cruising distance calculation device is for an electric moving object (100), which is configured to move in a horizontal direction and a vertical direction. The cruising distance calculation device comprises: a distance calculation unit (26) configured to acquire a corrected remaining power amount, which is obtained by correcting a remaining power amount of a battery (107) provided to the electric moving object, with a departure and arrival power amount, which is required during departure and/or arrival of the electric moving object, and calculate a cruising distance based on the corrected remaining power amount; and an output unit (27) configured to output information related to a calculation result of the distance calculation unit.

### (Technical idea 2)

The cruising distance calculation device according to technical idea 1, further comprises: a remaining power amount correction unit (24) configured to acquire the remaining power amount of the battery and the departure and arrival power amount, and subtract the departure and arrival power amount from the remaining power amount of the battery to obtain the corrected remaining power amount.

### (Technical idea 3)

The cruising distance calculation device according to technical idea 2, further comprises: a departure and arrival power amount calculation unit (23) configured to calculate the departure and arrival power amount.

### (Technical idea 4)

The cruising distance calculation device is according to technical idea 3.
the departure and arrival power amount calculation unit is configured to calculate the departure and arrival power amount based on history information.

### (Technical idea 5)

The cruising distance calculation device is according to technical idea 4.
the history information includes information related to a past departure and arrival power amount at a target departure point and/or a target arrival point.

### (Technical idea 6)

The cruising distance calculation device is according to technical idea 4 or 5.
the history information includes information related to a past departure and arrival power amount in the same model as the electric moving object.

### (Technical idea 7)

The cruising distance calculation device is according to any one of technical ideas 4 to 6.
the departure and arrival power amount calculation unit is configured to correct the departure and arrival power amount based on cruising information and/or weather information of a target departure point and/or a target arrival point.

### (Technical idea 8)

The cruising distance calculation device is according to any one of technical ideas 3 to 7. The departure and arrival power amount calculation unit is configured to calculate the departure and arrival power amount based on SOC dependence of a maximum output of the battery.

### (Technical idea 9)

The cruising distance calculation device is according to technical idea 8. The departure and arrival power amount calculation unit is configured to correct the departure and arrival power amount based on a battery temperature or battery degradation.

### (Technical idea 10)

The cruising distance calculation device according to any one of technical ideas 1 to 9, further comprises: a power consumption rate calculation unit (25) configured to calculate a power consumption rate during cruising. The power consumption rate calculation unit is configured to correct the power consumption rate based on an altitude or an altitude variation during the cruising.

### (Technical idea 11)

A navigation management system is for an electric moving object (100), which is configured to move in a horizontal direction and a vertical direction. The navigation management system comprises: a cruising distance calculation device (20) configured to calculate a cruising distance of the electric moving object and output information related to a calculation result; and a navigation management device (30) configured to manage navigation of the electric moving object and perform predetermined processing based on the information. The cruising distance calculation device is configured to acquire a corrected remaining power amount, which is obtained by correcting a remaining power amount of a battery (107) provided to the electric moving object, with a departure and arrival power amount, which is required during departure and/or arrival of the electric moving object, and calculate the cruising distance based on the corrected remaining power amount.

### (Technical idea 12)

The navigation management system is according to technical idea 11. The navigation management device is configured to display a warning inside the electric moving object and/or notify the ground station, when the cruising distance falls below a first threshold, which is based on a remaining cruising distance.

### (Technical idea 13)

The navigation management system is according to technical idea 12. The navigation management device is configured to control power inside the electric moving object to reduce power consumption of the electric moving object, when the cruising distance falls below a second threshold, which is based on the remaining cruising distance and equal to or smaller than the first threshold.

### (Technical idea 14)

The navigation management system is according to technical idea 13. The navigation management device is configured to re-plan a navigation schedule of the electric moving object, when the cruising distance falls below a third threshold, which is based on the remaining cruising distance and smaller than the second threshold.

### (Technical idea 15)

The navigation management system is according to any one of technical ideas 11 to 14. The cruising distance calculation device is configured to perform authentication on the cruising distance for a navigation schedule during planning of the navigation schedule or before departure of the electric moving object, and output an authentication result. The navigation management device is configured to approve the navigation schedule or permit the departure, when acquiring the authentication result in which the cruising distance satisfies the navigation schedule.

### (Technical idea 16)

The navigation management system is according to any one of technical ideas 11 to 15. The navigation management device is configured to manage charging of the electric moving object, such that the cruising distance satisfies a navigation schedule.

## Claims

1. A cruising distance calculation device for an electric moving object (100), which is configured to move in a horizontal direction and a vertical direction, the cruising distance calculation device comprising:
a distance calculation unit (26) configured to
acquire a corrected remaining power amount, which is obtained by correcting a remaining power amount of a battery (107) provided to the electric moving object, with a departure and arrival power amount, which is required during departure and/or arrival of the electric moving object, and
calculate a cruising distance based on the corrected remaining power amount; and
an output unit (27) configured to output information related to a calculation result of the distance calculation unit.

2. The cruising distance calculation device according to claim 1, further comprising:
a remaining power amount correction unit (24) configured to
acquire the remaining power amount of the battery and the departure and arrival power amount, and
subtract the departure and arrival power amount from the remaining power amount of the battery to obtain the corrected remaining power amount.

3. The cruising distance calculation device according to claim 2, further comprising:
a departure and arrival power amount calculation unit (23) configured to calculate the departure and arrival power amount.

4. The cruising distance calculation device according to claim 3, wherein
the departure and arrival power amount calculation unit is configured to calculate the departure and arrival power amount based on history information.

5. The cruising distance calculation device according to claim 4, wherein
the history information includes information related to a past departure and arrival power amount at a target departure point and/or a target arrival point.

6. The cruising distance calculation device according to claim 4 or 5, wherein
the history information includes information related to a past departure and arrival power amount in a same model as the electric moving object.

7. The cruising distance calculation device according to claim 4, wherein
the departure and arrival power amount calculation unit is configured to correct the departure and arrival power amount based on cruising information and/or weather information of a target departure point and/or a target arrival point.

8. The cruising distance calculation device according to claim 3, wherein
the departure and arrival power amount calculation unit is configured to calculate the departure and arrival power amount based on SOC dependence of a maximum output of the battery.

9. The cruising distance calculation device according to claim 8, wherein
the departure and arrival power amount calculation unit is configured to correct the departure and arrival power amount based on a battery temperature or battery degradation.

10. The cruising distance calculation device according to any one of claims 1 to 4, further comprising:
a power consumption rate calculation unit (25) configured to calculate a power consumption rate during cruising, wherein
the power consumption rate calculation unit is configured to correct the power consumption rate based on an altitude or an altitude variation during the cruising.

11. A navigation management system for an electric moving object (100), which is configured to move in a horizontal direction and a vertical direction, the navigation management system comprising:
a cruising distance calculation device (20) configured to calculate a cruising distance of the electric moving object and output information related to a calculation result; and
a navigation management device (30) configured to manage navigation of the electric moving object and perform predetermined processing based on the information, wherein
the cruising distance calculation device is configured to
acquire a corrected remaining power amount, which is obtained by correcting a remaining power amount of a battery (107) provided to the electric moving object, with a departure and arrival power amount, which is required during departure and/or arrival of the electric moving object, and
calculate the cruising distance based on the corrected remaining power amount.

12. The navigation management system according to claim 11, wherein
the navigation management device is configured to display a warning inside the electric moving object and/or notify a ground station, when the cruising distance falls below a first threshold, which is based on a remaining cruising distance.

13. The navigation management system according to claim 12, wherein
the navigation management device is configured to control power inside the electric moving object to reduce power consumption of the electric moving object, when the cruising distance falls below a second threshold, which is based on the remaining cruising distance and equal to or smaller than the first threshold.

14. The navigation management system according to claim 13, wherein
the navigation management device is configured to re-plan a navigation schedule of the electric moving object, when the cruising distance falls below a third threshold, which is based on the remaining cruising distance and smaller than the second threshold.

15. The navigation management system according to any one of claims 11 to 14, wherein
the cruising distance calculation device is configured to perform authentication on the cruising distance for a navigation schedule during planning of the navigation schedule or before departure of the electric moving object, and output an authentication result, and
the navigation management device is configured to approve the navigation schedule or permit the departure, when acquiring the authentication result in which the cruising distance satisfies the navigation schedule.

16. The navigation management system according to any one of claims 11 to 14, wherein
the navigation management device is configured to manage charging of the electric moving object, such that the cruising distance satisfies a navigation schedule.

17. A program to be applied to an electric moving object (100), which is configured to move in a horizontal direction and a vertical direction, the program configured to cause at least one processing unit (102) to:
calculate a cruising distance based on a corrected remaining power amount, which is acquired by correcting a remaining power amount of a battery (107) provided to the electric moving object, with a departure and arrival power amount, which is required during departure and/or arrival of the electric moving object; and
output information related to a calculation result.
